# EUROPEAN PATENT APPLICATION

(11) **EP 3 363 675 A1**
(43) Date of publication of application: **22.08.2018**
(21) Application number: 17156813.2
(22) Date of filing: 20.02.2017
(51) Int. Cl.: B60L 11/18

(54) **A METHOD AND APPARATUS FOR ALIGNING AN ELECTRIC VEHICLE WITH A CHARGING PAD**

(71) Applicant: Continental Automotive GmbH, 30165 Hannover (DE)
(72) Inventor: Padiri, Bhanu Prakash, 560037 Bangalore (IN)
(74) Representative: Bobbert, Christiana

(57) **Abstract**

A method and apparatus for aligning an electric vehicle comprising a battery with a charging pad adapted to charge the vehicle's battery, the method comprising the steps of processing (S1) captured images of the vehicle's surrounding to detect a charging pad; selecting (S2) in the captured images at least one reference pattern in the vicinity of the detected charging pad; and tracking (S3) the detected charging pad and the at least one selected reference pattern to steer the electric vehicle over the detected charging pad and to align the electric vehicle with the detected charging pad.

## Description

The invention relates to a method and apparatus for aligning an electric vehicle comprising a battery with a charging pad adapted to charge the vehicle's battery.

Electric vehicles comprise batteries which require charging. Charging can be performed wireless by induction. For this purpose, the electric vehicle can comprise an inductive pick-up element which is normally located at the bottom of the vehicle chassis and which has to be aligned to a corresponding charging inductor of a charging pad.

In conventional electric vehicles, the alignment of the pick-up conductive element of the electric vehicle with a charging pad is performed manually under control of a driver. However, since the driver has to drive the electric vehicle over the charging pad the charging pad is no longer visible to the driver which makes the alignment of the pick-up conductive element of the car with the charging pad beneath the vehicle chassis difficult and cumbersome. Accordingly, it takes considerable time to align the pickup inductive element with the charging coil of the charging pad. Moreover, the alignment of the electric vehicle with the charging pad is often suboptimal so that the effectiveness of the charging process is diminished. This in turn increases the required charging time for charging the battery.

Accordingly, it is an object of the present invention to provide a method and apparatus which improves the alignment of an electric vehicle with a charging pad for charging a vehicle's battery.

This object is achieved according to a first aspect of the present invention by a method comprising the features of claim 1.

The invention provides a method for aligning an electric vehicle comprising a battery with a charging pad adapted to charge the vehicle's battery,
the method comprising the steps of:
processing captured images of the vehicle's surrounding to detect a charging pad,
selecting in the captured images at least one reference pattern in the vicinity of the detected charging pad and tracking the detected charging pad and the at least one selected reference pattern to steer the electric vehicle over the detected charging pad and to align the electric vehicle with the detected charging pad.

In a possible embodiment of the method according to the first aspect of the present invention, the images of the vehicle's surrounding are captured by vehicle cameras attached to a vehicle chassis of the electric vehicle.

In a still further possible embodiment of the method according to the first aspect of the present invention, the camera images of the vehicle's surrounding are displayed and at least one reference pattern is selected in the displayed camera images by a user by means of a user interface.

In a still further possible embodiment of the method according to the first aspect of the present invention, at least one reference pattern is selected automatically depending on at least one selection criterion.

In a still further possible embodiment of the method according to the first aspect of the present invention, the reference pattern comprises a visible pattern of the ground around the detected charging pad.

In a further possible embodiment of the method according to the first aspect of the present invention, the reference pattern comprises a visible pattern of an object located close to the detected charging pad or of the surrounding around the detected charging pad.

In a still further possible embodiment of the method according to the first aspect of the present invention, the selected reference patterns are stored in a memory.

In a still further possible embodiment of the method according to the first aspect of the present invention, the tracking is performed using measured distances and angles to the selected reference patterns.

In a further possible embodiment of the method according to the first aspect of the present invention, the distances are measured by means of sensors of the electric vehicle.

In a further possible embodiment of the method according to the first aspect of the present invention, while the vehicle chassis moves over the detected charging pad such that it is no longer visible to the vehicle cameras attached to the vehicle chassis, the alignment of the electric vehicle is performed on the basis of the selected reference patterns in the vicinity of the detected charging pad still visible to the vehicle cameras.

In a further possible embodiment of the method according to the first aspect of the present invention, the alignment of the vehicle is performed depending on vehicle specification data of the electric vehicle stored in a memory.

The invention further provides according to a second aspect an alignment apparatus for alignment of an electric vehicle with a charging pad adapted to charge a battery of the electric vehicle comprising the features of claim 10.

The invention provides according to the second aspect an alignment apparatus for alignment of an electric vehicle with a charging pad adapted to charge a battery of the electric vehicle,
wherein said alignment apparatus comprises:
an image processing unit adapted to process images of the vehicle's surrounding to detect a charging pad and a tracking unit adapted to track the detected charging pad and at least one selected reference pattern in the vicinity of the detected charging pad to steer the electric vehicle over the detected charging pad and to align the electric vehicle with the detected charging pad.

In a possible embodiment of the alignment apparatus according to the second aspect of the present invention, the image processing unit is connected to vehicle cameras attached to a vehicle chassis of the electric vehicle and adapted to capture images of the vehicle's surrounding,

In a possible embodiment of the alignment apparatus according to the second aspect of the present invention, the vehicle cameras comprise
front view cameras,
rear view cameras,
side view cameras and/or
surround view cameras.

In a possible embodiment of the alignment apparatus according to the second aspect of the present invention, the tracking unit is configured to align an inductive pick-up element at a bottom side of the vehicle chassis of said electric vehicle with an inductive charging element of the detected charging pad.

In a possible embodiment of the alignment apparatus according to the second aspect of the present invention, the alignment apparatus comprises a selection unit adapted to select reference patterns in the vicinity of a detected charging pad.

In a possible embodiment of the alignment apparatus according to an aspect of the present invention, the alignment apparatus comprises a HMI interface as a selection unit.

The invention further provides according to a further aspect an electric vehicle comprising the features of claim 14.

The invention provides according to this aspect an electric vehicle comprising a chargeable battery,
vehicle cameras adapted to capture images of the vehicle's surrounding and comprising an alignment apparatus according to the second aspect of the present invention.

In a possible embodiment of the electric vehicle according to the third aspect of the present invention, the electric vehicle comprises an inductive pick-up element located at the bottom of the vehicle chassis connected via an AC/DC rectifier and an energy management system of the electric vehicle to the chargeable battery of the electric vehicle.

In the following, possible embodiments of the different aspects of the present invention are described in more detail with reference to the enclosed figures.
- Fig. 1: shows a block diagram of a possible exemplary embodiment of an alignment apparatus for alignment of an electric vehicle with a charging pad according to an aspect of the present invention;
- Fig. 2: shows a flowchart of a possible exemplary embodiment of a method for aligning an electric vehicle comprising a battery with a charging pad adapted to charge the vehicle's battery according to an aspect of the present invention;
- Fig. 3: shows an exemplary embodiment of an electric vehicle according to a further aspect of the present invention comprising an alignment apparatus as illustrated in Fig. 1;
- Fig. 4: shows a flowchart of a possible exemplary embodiment of a method for aligning an electric vehicle as illustrated in Fig. 3.

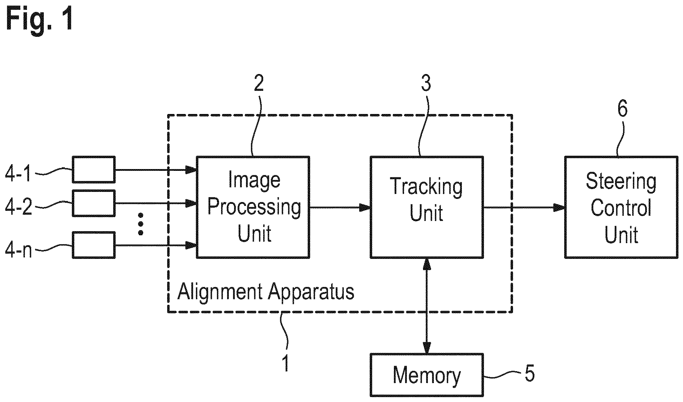

As can be seen in Fig. 1, an alignment apparatus 1 for alignment of an electric vehicle with a charging pad adapted to charge a battery of the electric vehicle can comprise two main units. The alignment apparatus 1 comprises in the illustrated embodiment of Fig. 1 an image processing unit 2 and a tracking unit 3. The image processing unit 2 is adapted to process images of the vehicle's surrounding to detect a charging pad. The tracking unit 3 of the alignment apparatus 1 is adapted to track the detected charging pad and at least one selected reference pattern in the vicinity of the detected charging pad to steer the electric vehicle over the detected charging pad and to align the electric vehicle with the detected charging pad.

In a possible embodiment, the image processing unit 2 receives images of the vehicle's surrounding from one or several vehicle cameras 4-1, 4-2 ... 4-N. The vehicle cameras can comprise for instance front view cameras, rear view cameras, side view cameras and/or surround view cameras attached to the vehicle chassis. Vehicle cameras are adapted to capture images of the vehicle's surrounding. The vehicle cameras can provide images or image frames to the image processing unit 2. The image processing unit 2 of the alignment apparatus 1 is adapted to process the received images of the vehicle's surrounding to detect a charging pad. At least one reference pattern in the vicinity of the detected charging pad is selected. The tracking unit 3 tracks the detected charging pad and the at least one selected reference pattern to steer the electric vehicle over the detected charging pad to align the electric vehicle with the detected charging pad.

The camera images of the vehicle's surrounding can be displayed in a possible embodiment on a display or screen to a user, for instance to a driver of the vehicle. In a possible embodiment, at least one reference pattern can be selected in the displayed camera images by a user by means of a user interface. In an alternative embodiment, at least one reference pattern can also be selected automatically depending on at least one selection criterion such as light conditions.

The reference pattern comprises a visible pattern of the ground around the detected charging pad or any visible pattern of an object located close to the detected charging pad. In a possible embodiment, the selected reference patterns can be stored in a memory 5 as illustrated in Fig. 1.

In a further possible embodiment, the tracking can be performed by the tracking unit 3 of the alignment apparatus 1 by using measured distances to the selected reference patterns. Accordingly, the tracking unit 3 can perform a tracking using visual odometry. In a possible embodiment, the distances can be measured by means of sensors of the electric vehicle. These sensors can for instance comprise ultrasonic sensors of the electric vehicle. In a further possible embodiment, these sensors can comprise camera sensors or radar sensors. The tracking unit 3 generates an output signal which can be applied to a steering control unit 6 of the electric vehicle.

While the vehicle chassis moves over the detected charging pad such that it is no longer visible to the vehicle cameras 4 attached to the vehicle chassis, the alignment of the electric vehicle can be performed on the basis of the selected reference patterns in the vicinity of the detected charging pad still visible to the vehicle cameras 4. In a possible embodiment, the alignment of the vehicle is performed depending on vehicle specification data of the vehicle which can also be stored in the memory 5. The vehicle specification data can comprise data about the size and/or form of the vehicle chassis.

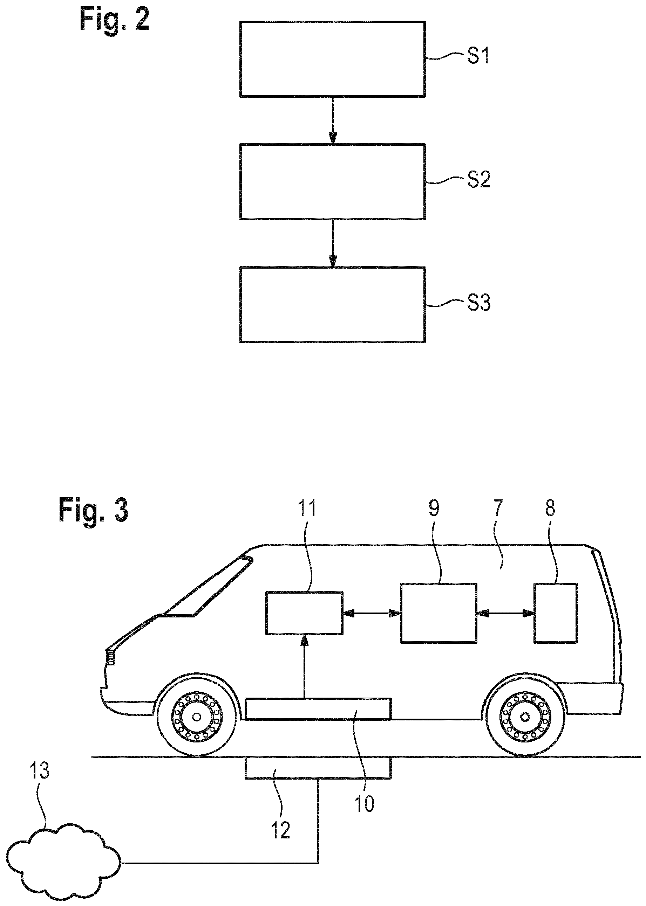

Fig. 2 shows a flowchart of a possible exemplary embodiment of an alignment method according to an aspect of the present invention. The method is provided for aligning an electric vehicle comprising a battery with a charging pad adapted to charge the vehicle's battery.

In the illustrated embodiment of Fig. 2, the method comprises three main steps.

In a first step S1, captured images of the vehicle's surrounding are processed to detect a charging pad. This processing can be performed in a possible embodiment by an image processing unit 2 as illustrated in Fig. 1.

In a further step S2, at least one reference pattern is selected in the captured images in the vicinity of the detected charging pad. In a possible embodiment, the selection can be performed by a user based on displayed images. In an alternative embodiment, the selection can be performed automatically depending on at least one selection criterion.

In a further step S3, the detected charging pad and at least one selected reference pattern is tracked to steer the electric vehicle over the detected charging pad and to align the electric vehicle with the detected charging pad. The tracking in step S3 can be performed by a tracking unit 3 as illustrated in Fig. 1.

In a possible embodiment, the alignment apparatus 1 as shown in Fig. 1 can use an existing camera system of the electric vehicle. The camera system which can comprise front, rear and side view cameras as well as surround view cameras can be used to detect patterns to align the electric vehicle exactly on the charging pad. In this way, any misalignment of the induction plates, i.e. of a charging conductor of the charging pad and an inductive pick-up element of the electric vehicle is avoided. In this way, the charging efficiency is increased and the required charging time is reduced.

Fig. 3 shows schematically an electric vehicle EV 7 according to a further aspect of the present invention. The electric vehicle 7 comprises a vehicle chassis, where one or several vehicle cameras can be positioned. The electric vehicle comprises at least one chargeable battery 8 as shown in Fig. 3. The chargeable battery 8 is connected to an energy management system 9 of the electric vehicle 7. The electric vehicle 7 further comprises an inductive pick-up element 10 located at the bottom of the vehicle chassis and connected to an AC/DC rectifier 11. The AC/DC rectifier 11 performs an AC/DC current rectification of the electric current received from the inductive pick-up element 10 and supplies the DC current to the energy management system 9 of the electric vehicle 7. The DC current is used to charge the chargeable battery 8. As can be seen in Fig. 3, the inductive pick-up element 10 is located over a charging conductor 12 of a charging battery beneath the vehicle chassis. The charging conductor 12 can be connected to an electric grid 13 as shown in Fig. 3. The energy transfer from the charging conductor 12 to the inductive pick-up element 10 of the vehicle 7 is performed by means of an electromagnetic field. Accordingly, the energy transfer is performed wireless. After performing a method for aligning the electric vehicle 7 as illustrated in Fig. 2, the inductive pick-up element 10 is exactly aligned with the charging conductor 12 of the charging pad.

The same charging pad can be used for different models of vehicles having different sizes and dimensions. This is achieved because the alignment of the vehicle can be performed depending on vehicle specification data of the electric vehicle 7 stored in the memory 5. By using the vehicle cameras of the vehicle, in particular the front cameras, it is possible to use referent patterns as features around the charging pad. The reference pattern can be around the charging pad at ground level or can be formed by an object nearby. Vehicle cameras can track the charging pad as well as the features or patterns near the charging pad included in the captured camera images so that an exact alignment can be performed. Further, the tracking unit 3 can be aware about the vehicle specifications, i.e. ego vehicle data where the inductive pick-up element of the vehicle is available. By using the ego vehicle data, the alignment can be performed even more precisely.

The reference patterns to be tracked can be located close to charging pad but also with some distance as long as the reference pattern is within a viewing distance of the vehicle cameras. The reference patterns can be used and perform a continuously tracking of the reference pattern of the charging pad until the charging pad goes under the chassis of the vehicle. Once the reference pattern of the charging pad goes under the vehicle, the tracking can be performed with image features or reference patterns of other predefined or preselected objects. The features can be selected by a user through a HMI, e.g. a touch pad, and/or can be predetermined, in particular in a homelike situation. The method according to the present invention detects reference patterns and aligns the vehicle perfectly over the charging pad. Once the vehicle chassis starts moving over the charging pad, different techniques can be used to continue the tracking like template matching or feature tracking to achieve the final alignment of the car or vehicle with the charging pad.

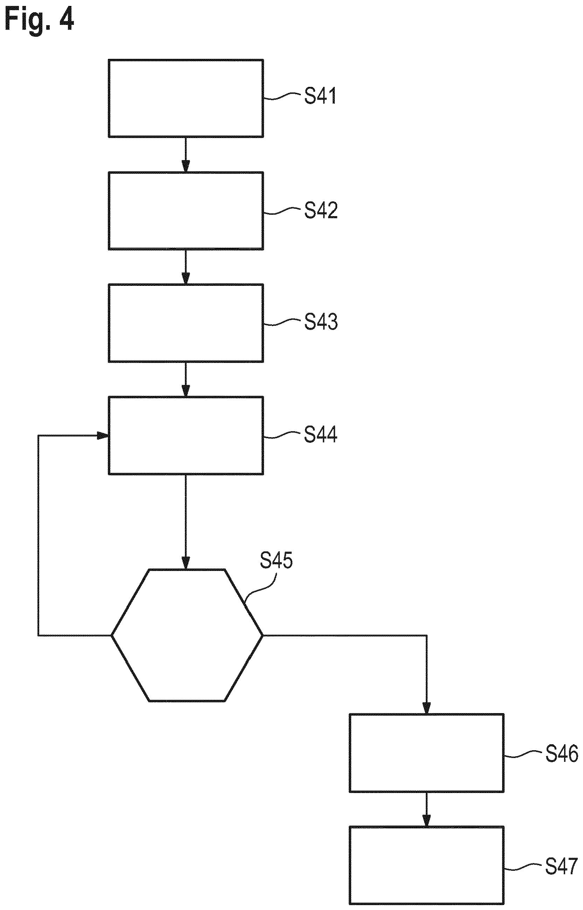

Fig. 4 shows a flowchart of a possible exemplary embodiment of a method aligning an electric vehicle 7. In the illustrated exemplary embodiment, the alignment is performed using images captured from a front view camera of the electric vehicle 7.

In step S41, at least one front view camera of the electric vehicle 7 captures images of the vehicle's surrounding.

In a further step S42, reference patterns or features around the charging pad are selected using in the illustrated embodiment a user interface HMI such as a touch interface.

In a further step S43, an algorithm can be performed to detect wireless a charging pad pattern. This can be for instance the shape of the charging pad itself and is fixed. The pattern can be predefined by the manufacturer of the charging pad. Accordingly, the second reference pattern is a predetermined reference pattern whereas the first reference pattern selected in step S42 can be a user-defined reference pattern.

In a further step S44, a tracking algorithm can be performed and the vehicle can be steered towards the charging pad. The steer and control unit 6 can steer the vehicle 7 with a controlled speed and angle towards the charging pad.

Further, in step S45, it is checked whether the vehicle 7 has moved so far that the charging pad moves under the vehicle chassis. If the charging pad has not yet moved under the vehicle chassis and is still visible to the front view camera the process returns to step S44 as illustrated in Fig. 4. Otherwise, the process moves on to step S46.

In step S46, the tracking is performed using the user-defined reference pattern instead of the reference pattern of the charging pad which is no longer visible to the front cameras. Accordingly, the tracking in step S46 is performed on the basis of a selected reference pattern wherein the reference pattern can be selected by a user using a user interface.

In a further step S47, a history image can be displayed as a transparent blend. This image can be displayed to the driver of the vehicle so that the charging pad under the vehicle chassis can virtually be seen by the driver. The image can be calculated or extracted from previous views or images of the respective area of the ground before the vehicle moves over the area.

With the method and apparatus according to the present invention, it is possible to align an electric vehicle 7 exactly over a charging pad. Accordingly, the efficiency of the charging process is increased. Consequently, the required charging time is reduced. The method and apparatus for aligning an electric vehicle 7 can be implemented without requiring additional hardware for the vehicle. It is possible to use an existing camera system of a vehicle for capturing the images processed by the alignment apparatus 1 according to the present invention. The charging pad can be located in a house environment or at commercial spaces such as malls or at any kind of parking spaces. By using visualization of a history ground plane, it is possible to display how the alignment is going on and the vehicle chassis is moved over the charging pad. This makes the alignment more comfortable to the driver of the vehicle. The method and apparatus for aligning an electric vehicle can be used for any kind of electric vehicle, in particular cars or trucks.

## Claims

1. A method for aligning an electric vehicle comprising a battery with a charging pad adapted to charge the vehicle's battery,
the method comprising the steps of:
(a) processing (S1) captured images of the vehicle's surrounding to detect a charging pad;
(b) selecting (S2) in the captured images at least one reference pattern in the vicinity of the detected charging pad; and
(c) tracking (S3) the detected charging pad and the at least one selected reference pattern to steer the electric vehicle over the detected charging pad and to align the electric vehicle with the detected charging pad.

2. The method according to claim 1 wherein the images of the vehicle's surrounding are captured by vehicle cameras (4) attached to a vehicle chassis of the electric vehicle.

3. The method according to claim 1 or 2 wherein the camera images of the vehicle's surrounding are displayed and at least one reference pattern is selected in the displayed camera images by a user by means of a user interface or wherein at least one reference pattern is selected automatically depending on at least one selection criterion.

4. The method according to any of the preceding claims 1 to 3 wherein the reference pattern comprises a visible pattern of the ground around the detected charging pad and/or
a visible pattern of an object located close to the detected charging pad.

5. The method according to any of the preceding claims 1 to 4 wherein the selected reference patterns are stored in a memory (5).

6. The method according to any of the preceding claims 1 to 5 wherein the tracking is performed using measured distances to the selected reference patterns.

7. The method according to claim 6 wherein the distances are measured by means of sensors of the electric vehicle.

8. The method according to any of the preceding claims 1 to 7 wherein while the vehicle chassis moves over the detected charging pad such that it is no longer visible to the vehicle cameras attached to the vehicle chassis, the alignment of the electric vehicle is performed on the basis of the selected reference patterns in the vicinity of the detected charging pad still visible to the vehicle cameras.

9. The method according to any of the preceding claims 1 to 8 wherein the alignment of the vehicle is performed depending on vehicle specification data of the electric vehicle stored in a memory (5).

10. An alignment apparatus (1) for alignment of an electric vehicle (7) with a charging pad adapted to charge a battery (8) of the electric vehicle (7),
said alignment apparatus (1) comprising:
(a) an image processing unit (2) adapted to process images of the vehicle's surrounding to detect a charging pad; and
(b) a tracking unit (3) adapted to track the detected charging pad and at least one selected reference pattern in the vicinity of the detected charging pad to steer the electric vehicle (7) over the detected charging pad and to align the electric vehicle (7) with the detected charging pad.

11. The alignment apparatus according to claim 10 wherein the image processing unit (2) is connected to vehicle cameras (4) attached to a vehicle chassis of the electric vehicle (7) and adapted to capture images of the vehicle's surrounding,
wherein the vehicle cameras (4) comprise
front view cameras,
rear view cameras,
side view cameras and/or
surround view cameras.

12. The alignment apparatus according to any of the preceding claims 10 to 11 wherein the tracking unit (3) is configured to align an inductive pick-up element (10) at a bottom side of the vehicle chassis of said electric vehicle (7) with an inductive charging element (12) of the detected charging pad.

13. The alignment apparatus according to any of the preceding claims 10 to 12 wherein the alignment apparatus (1) comprises a selection unit, in particular a HMI, adapted to select reference patterns in the vicinity of a detected charging pad.

14. An electric vehicle (7) comprising
a chargeable battery (8);
vehicle cameras (4) adapted to capture images of the vehicle's surrounding; and
an alignment apparatus (1) according to any of the preceding claims 10 to 13.

15. The electric vehicle according to claim 14 wherein the electric vehicle comprises
an inductive pick-up element (10) located at the bottom of the vehicle chassis connected via an AC/DC rectifier (11) and an energy management system (9) of the electric vehicle (7) to the chargeable battery (8) of the electric vehicle (7).
